Europäisches Patentamt

European Patent Office

Office européen des brevets

(11) Publication number: **0 423 959 A2**

## EUROPEAN PATENT APPLICATION

(21) Application number: 90310590.6

(51) Int. Cl.⁵: **G06F 15/40**

(22) Date of filing: 27.09.90

(30) Priority: **16.10.89 US 421574**

(43) Date of publication of application:
**24.04.91 Bulletin 91/17**

(84) Designated Contracting States:
**DE FR GB IT SE**

(71) Applicant: **APPLE COMPUTER, INC.**
**20525 Mariani Avenue**
**Cupertino, California 95014(US)**

(72) Inventor: **Schaeffer, Arnold**
**995 Round Hill Road**
**Redwood City, California 94061(US)**

(74) Representative: **Wombwell, Francis et al**
**Potts, Kerr & Co. 15, Hamilton Square**
**Birkenhead Merseyside L41 6BR(GB)**

(54) Recursive run array storage of data.

(57) A new structure, called a recursive run array, stores data as storage nodes linked in a tree structure, each storage node being adapted to store codes describing a run of data. A run of data is one or more consecutive, equal data elements. The codes describing a run of data include a count of the number of data elements within the run, and the data for the data elements of the run. The storage node can also store a starting index for the data elements of the run. Storage nodes can be linked in a tree structure by a first link to the first data element of a preceding run, and a second link to the first data element of a following run. A method in accordance with this invention includes identifying runs within the data; and for each run, storing codes describing the run in a storage node; and linking the storage nodes in a tree structure. The storage of data in a tree structure of storage nodes, with the contents of each storage node describing a run of the data, allows the data to be efficiently stored, searched, modified, and expanded.

"Ask not what your country can do for you
but ask what *you* can do for your country."

| 54 | 3 | Italic |
|---|---|---|

| 0 | 54 | Plain |
|---|---|---|

| 57 | 25 | Plain |
|---|---|---|

## FIG. 3

EP 0 423 959 A2

## RECURSIVE RUN ARRAY STORAGE OF DATA

### BACKGROUND OF THE INVENTION

This invention relates to the storage of data. A structure called a recursive run array stores a compressed form of the data in a tree structure. This reduces the size, and increases the speed of access and modification of the data.

Consider a block of data in which each element can differ, but which often contains sequences which repeat the same element. It is known to represent such a sequence by a "run." A run of data is one or more consecutive, equal data elements. A run can be described by a pair of codes in which the first code is a count of the number of consecutive data elements in the run, and the second code is the single data element common to the elements in the run. Since a long sequence of data elements can be described by a single run, the storage requirements can be reduced proportional to the average length of runs within the data. This technique is commonly called "run length encoding."

For example, in a string of text, each character could be different but the typeface or size, usually called the "style," will often be the same for long strings of characters. Therefore, it is useful to store the style information in runs.

In a block of numbers, each number could be different but the format, such as integer or decimal, or the precision, will often be the same for long rows or columns of numbers. Therefore, it is useful to store the format information in runs.

As an example, consider the following first example sentence:
"Ask not what your country can do for you but ask what *you* can do for your country."

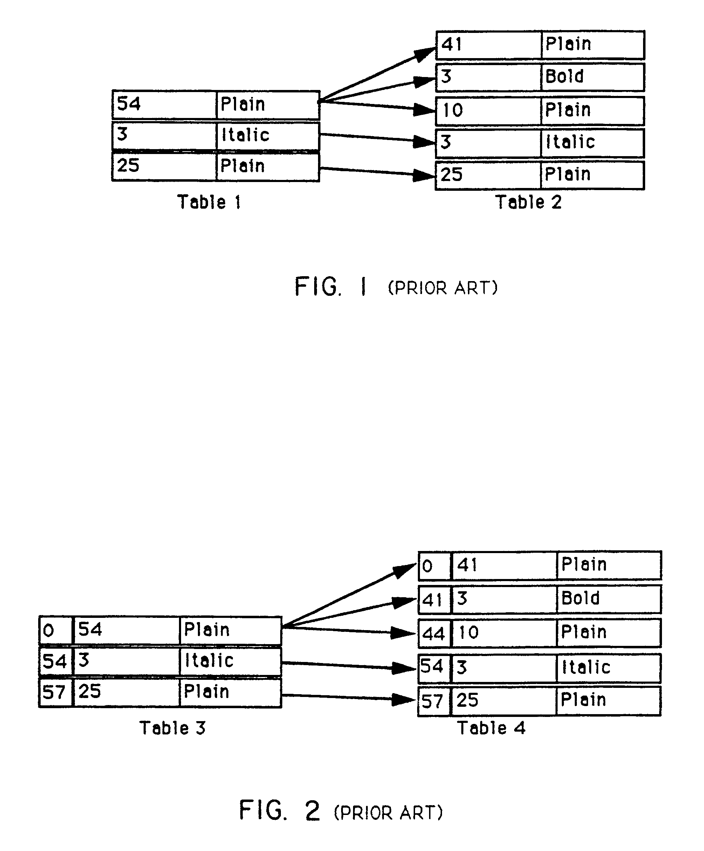

The style information for this string of characters could be stored as 82 style elements, one for each character or space. However, since adjacent elements are usually of the same style, it is useful to store the style information as a table of runs. Figure 1 shows the storage and modification of data stored as a table of runs. Table 1 of Figure 1 shows a table of runs representing the style information for the first example sentence. The first fifty-four characters in plain text style are stored as the run (54, Plain). The next three italicized characters are stored as the run (3, Italic), and so on. This table of runs is far smaller than the previously suggested 82 elements of storage.

However, in this table of runs, access to the style information for a particular character may be slow, since the system must first determine in which run the character resides, and then use the style information from that run. This requires a linear search through all of the preceding runs in the table.

To change the style of a few characters in the string, such as a text editor might do, also requires a linear search through all of the preceding runs in the table, and often requires copying a large section of the table to a new table in order to accommodate the change. For example, if the first example sentence is changed into a second example sentence where the "but" is in bold face style as in:
"Ask not what your country can do for you **but** ask what *you* can do for your country.

The resulting table of runs is shown in Table 2 of Figure 1. This change would require copying the last two runs down two positions in the table and splitting the first run into three new runs.

A final problem with the table of runs occurs when the size of the table must be increased beyond the size initially allocated for the table. All of the runs will have to be copied to a new, larger table. While a table of runs may be satisfactory for a small number of runs, it has the disadvantages of slow access and difficult modification and growth.

In a known modification, a third code is added to each run to serve as a pointer or link to the next run. This form of a table of runs can be called a "linked list". A linked list does not remove the linear search behavior for table access and update but it does allow the table to grow without the necessity to copy large portions of the table.

A second known modification is to store in each run the index or count of the first element in the run, to form a "fast access representation". Figure 2 shows the storage and modification of data stored in fast access representation. Table 3 of Figure 2 represents the previous first example sentence in fast access representation. Table 4 of Figure 2 shows the modifications to represent the second example sentence in fast access representation. In this fast access representation, access is possible using a binary search, which yields access time on the order of log N, where N is the number of table entries. This is a substantial improvement over a linear search for access to the table. However, by consideration of Table 4 of Figure 2, it can be seen that modification of the table becomes even more complicated, because now the index of the first element in a run might need to be changed for all runs past the run to be changed.

2

These and other problems have led to the desire for a method of storing data which is compact, can be quickly searched, and is easy to modify and expand.

## SUMMARY OF THE INVENTION

This invention provides a new organization for storing data. Runs of data are compressed by run length encoding and stored in data storage nodes which are linked together in a tree structure called a recursive run array. This reduces the size, and increases the speed of access and modification of the data. Use of this invention can improve the performance of text editors, spreadsheets, or databases which operate on text or numeric data.

In the data, consecutive, equal data elements are identified as a run. Each run is described by codes including a count of the number of data elements within the run, and a single data element representing the data elements of the run. These codes are stored in storage nodes. Other codes can also be stored, such as a starting index for the data elements of the run. Storage nodes are linked into a tree structure by first and second links. If a particular run is designated to be the current run in a current storage node, the first link indicates a storage node storing a run preceding the current run, and a second link indicates a storage node storing a run following the current run.

The storage of data in a recursive run array allows the data to be efficiently stored, searched, modified, and expanded.

## BRIEF DESCRIPTION OF THE DRAWINGS

Figure 1 shows the storage and modification of data stored as a table of runs.

Figure 2 shows the storage and modification of data stored in fast access representation.

Figure 3 shows the representation of data in a recursive run array in accordance with this invention.

Figure 4 shows a recursive run array representation where the data of Figure 3 has been modified.

Figure 5 shows the contents of a run node for a recursive run array representation in accordance with this invention.

Figure 6 shows a recursive run array representation of the third example sentence.

Figure 7 shows the recursive run array representation of Figure 6 modified by the insertion of 5 more A's after element 16 in the run array.

Figure 8 shows the recursive run array representation of Figure 7 modified by the insertion of 7 E's beginning at element 23 in the run array.

Figure 9 shows the recursive run array representation of Figure 8 modified by the insertion of 10 F's at element 43.

Figure 10 shows the recursive run array representation of Figure 9 modified by the deletion of 4 elements starting at element 43.

Figure 11 shows the recursive run array representation of Figure 10 modified by the deletion of 10 elements beginning with element 13.

Figure 12 shows the recursive run array representation of Figure 11 modified by the removal of 11 elements starting with element number 29.

Figure 13 shows the recursive run array representation of Figure 12 modified by the coalesce of adjacent nodes containing the same element.

Figure 14 shows the recursive run array representation of Figure 13 modified by the removal of 14 elements starting at element number 13.

## DETAILED DESCRIPTION

This invention relates to a new method of storing data. This invention stores data as storage nodes linked in a tree structure, each storage node being adapted to store codes describing a run of data. A run of data is one or more consecutive, equal data elements. The codes describing a run of data can include a count of the number of data elements within the run, and the data for the data elements of the run. The storage node can also store a starting index for the data elements of the run. Storage nodes can be linked in a tree structure by a first link to the first data element of a preceding run, and a second link to the first data element of a following run. A method in accordance with this invention includes identifying runs within the data; and for each run, storing codes describing the run in a storage node; and linking the storage nodes in a tree structure. The storage of data in a tree structure of storage nodes, with the contents of each storage node describing a run of the data, allows the data to be efficiently stored, searched, modified. and expanded.

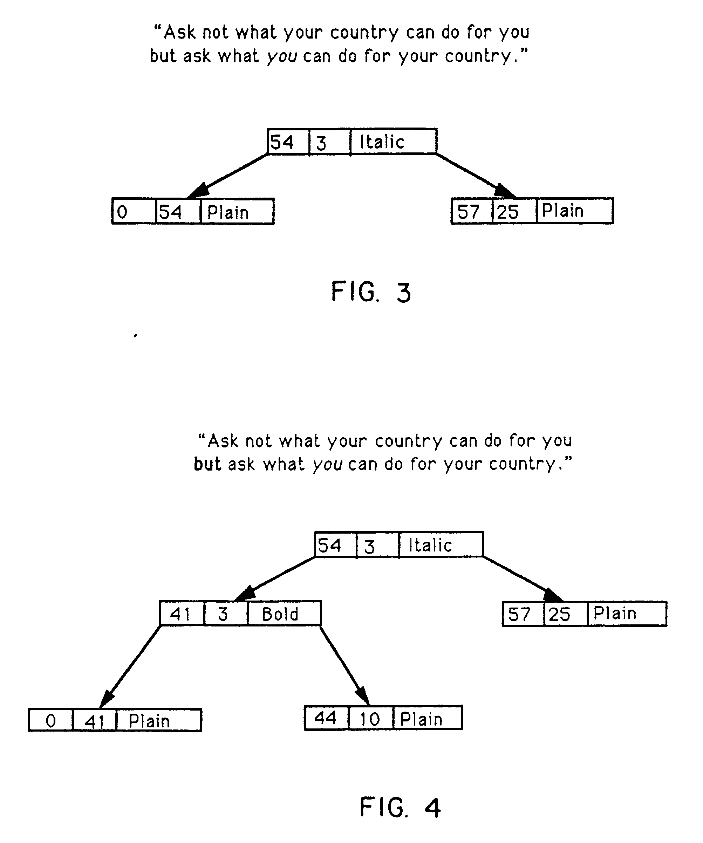

Figure 3 shows the representation of data in a recursive run array in accordance with this invention. In Figure 3 the runs for the above first example sentence are shown stored in storage nodes linked in a tree structure. The preferred form is an ordered binary tree structure of nodes linked by branches. Further information on tree structures may be found in *Algorithms + Data Structures = Programs*, Nicklaus Wirth,

Prentice-Hall, Inc., 1976, Section 4.4 "Tree Structures, and in *The Art of Computer Programming*, Donald E. Knuth, Addison-Wesley, 1973, Volumes 1 - 3.

To recreate the sequence of type information for the above first example sentence, the tree structure of Figure 3 is traversed from the run with the lowest index through the run with the highest index of the first element of the run. In the structure shown, this corresponds to beginning at the run in the leftmost terminal node or leaf, moving up the left branch to the run in the root node, and then moving down the right branch to the run in the rightmost terminal node.

Figure 4 shows a recursive run array representation where the data of Figure 3 has been modified. In particular, Figure 4 shows the representation resulting from the first example sentence being modified into the second example sentence. Consideration of the first and second example sentences, and of the corresponding representations of Figures 3 and 4 show how data type information can be stored and modified in a tree structure. To recreate the sequence of type information from Figure 4, again the tree structure is traversed from lowest to highest index, which is generally from left to right. However, all branches downward from a given node must be traversed before moving up a branch.

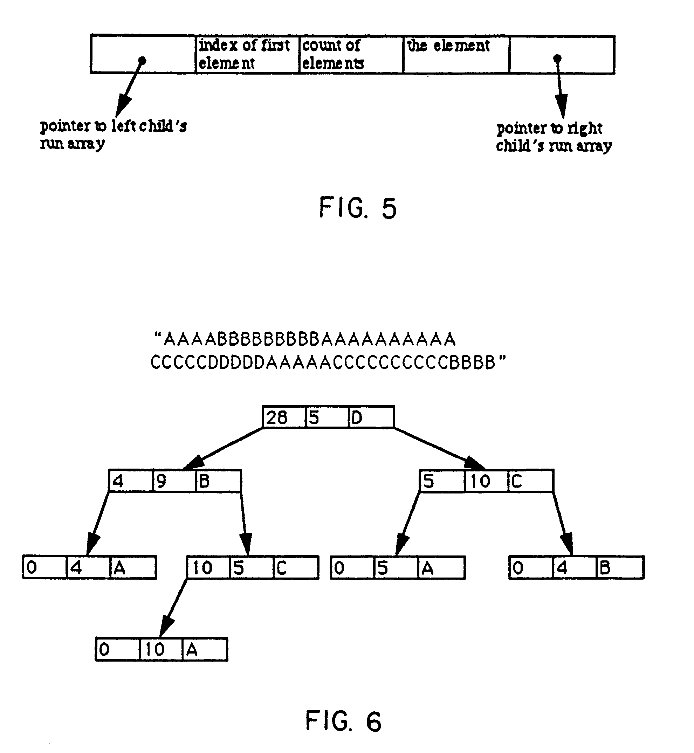

To establish and operate on the tree structure, the storage nodes can contain additional information used to link the nodes together. While several forms of linking nodes can be utilized, Figure 5 shows a preferred form. Figure 5 shows the contents of a storage node for a recursive run array representation in accordance with this invention. Each node has two links which establish the branches to lower level nodes: a first pointer to a node of information for a run preceding this one; and a second pointer to a node of information for a run following this one. Where there is no preceding or following run, the pointer may be left blank or be filled with a special flag to mark its condition. In this preferred form, the node also contains: a starting index for the elements of data in this run; a count of the number of elements of data in this run; and the type information for the elements of data in this run. When assembled into a tree structure, each node may be described as a "parent" node with two "children", a left child and a right child. As well as the "forward" links established by these pointers, "back" links may be used as well.

In a preferred form, the index of the start of the run is defined to be an index measured within the particular subtree the node is in, rather than measured from the beginning of the data. This improves the ability to insert new data ahead of previous data without requiring the renumbering of indexes. It also allows operations on the tree structure to affect only nodes within the same or lower subtrees.

When linked into a binary tree, the storage nodes can be searched and updated by methods of access which provide access time on the order of log N, where N is the number of nodes. Furthermore, "growing" the run array does not require copying, but instead links additional nodes into the tree structure via the pointers, which can be simply accomplished in logarithmic time. This allows the recursive run array representation to be significantly faster for searching, modification, and growth than any of the previous methods using a table of runs. This speed improvement can be used by any programs which store, access, and modify stored data. such as text editors, spreadsheets, or databases.

The use of a preferred form of recursive run array representation will be illustrated by a series of examples.

Consider the following third example sentence:

"AAAABBBBBBBBBAAAAAAAAAAACCCCCDDDDDAAAAACCCCCCCCCCBBBB"

As a table of runs, this could be described:

( 4, A)

( 9, B)

(10, A)

( 5, C)

( 5, D)

( 5, A)

(10, C)
( 4, B).

Figure 6 shows a recursive run array representation of the third example sentence. The deepest terminal node (0, 10, A) says that there is a run of 10 A's here. The index of the first A in this run with respect to this subtree is 0.

The next higher node (10, 5, C) represents a run of 5 C's. The index of the first C with respect to this subtree is 10. The index here is ten because of the ten A's below and to the left of the C's in this subtree. Between them, these two nodes represent the substring "AAAAAAAAAACCCCC."

Finally, as an example, the root node (28, 5, D) represents a run of 5 D's with the index of the first D equal to 28. The 28 is the number of elements preceding this node, all of which are in this node's left subtree (4 A's + 9 B's + 10 A's + 5 C's).

It should be noticed that each subtree in the run array representation is itself a tree of runs. This leads to the name "recursive run array representation."

The use of the recursive run array will be illustrated by examples of access, insertion, deletion, coalesoe, and replacement operations on the data in the tree.

The first operation to be illustrated is the access operation. That is, what is the data for the "n"th element of the run array? The pseudo-C language code for this operation is:

```
Access(long n)
{
  long      runningcount = 0;
  RunNode* currentnode = root;
  boolean found = FALSE;
  while((not found) and (currentnode != NIL))
   {
    runningcount = runningcount+currentnode->index_of_first_element;
    if (n < runningcount)
    {
      runningcount = runningcount - currentnode->index_of_first_element;
      currentnode = currentnode->leftchild;
    }
    else
      if ( n >= (currentnode->count_of_elements + runningcount))
      {
        runningcount = runningcount + currentnode->count_of_elements;
        currentnode = currentnode->rightchild;
      }
      else
        found = TRUE;
   }
  if (currentnode != NIL)
  {
    return  currentnode->element
  }
  else return NIL;
}
```

Each node has an index of its first element, and pointers to its left child and right child, where the left child is the preceding run, and the right child is the following run. As the tree is accessed, a running count of position in the tree is kept. For example, to access the element num`ber 15 of the array, start at the root and the runningcount gets set to 28. The index, 15, is less than 28 so subtract the index of the first element in this node from runningcount, so that runningcount now = 0, and then set currentnode to be the leftchild of this node.

Entering the node (4, 9, B) with runningcount = 0, the first thing that happens is runningcount gets set to 4. The index, 15, is not less than 4 so the next test is done.

The next test is whether the index, 15, is greater than or equal to runningcount + currentnode->count_of_elements. Since 15 > (4 + 9), this test is passed. Runningcount is set to 13 and currentnode is set to the rightchild of currentnode.

Continuing this process, enter the node (10, 5, C) and set runningcount up to 23 (13 + currentnode->index_of_first_element). The index, 15, is less than 23 so subtract the index of the first element in this node from the runningcount (runningcount now = 13) and then set currentnode to be the leftchild of this node.

Entering the node (0, 10, A), runningcount = 13 + 0 which is less than the index 15. Next see if 15 > (13 + currentnode->count_of_elements) which it is not. Therefore, the element "A" is found and returned as the result of the function.

It can be shown, as for binary trees, that the average running time for this search procedure is on the order of log N, where N is the number of nodes in the tree structure. At worse case, the behavior can be linear when the tree is not balanced. There are known techniques that can be used to balance the tree.

The next operation to be considered is inserting new elements in the run array. There are two cases to consider. The simplest case involves adding more elements to an existing node, R. There really are two things involved to do this. First, the count of elements in R must be updated. Second, the index_of_first_element must be updated for the appropriate nodes on the path to R. The normal access routine is used to find the node R; but, on the way to the node, before branching to the left, set currentnode = currentnode->leftchild, and increment currentnode->index_of_first_element by the number of elements added to its subtree. It is already known on the way down the tree how this insert will affect the nodes above where the insert will actually occur. This is a concept is exploited many times in other operations on the run array.

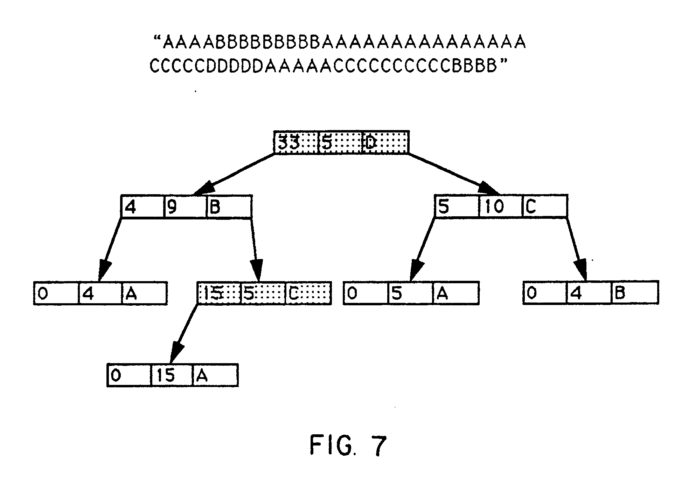

Therefore, to insert 5 more A's after element 16 in the run array, the resulting structure would look like Figure 7. Figure 7 shows the recursrve run array representation of Figure 6 modified by the insertion of 5 more A's after element 16 in the run array. Unlike the fast access solution, notice that a maximum of log N nodes need to be visited and updated during this insertion. Only update the index_of_first_element in the nodes colored in gray in Figure 7 because the A's are being inserted in the left subtree of the colored nodes.

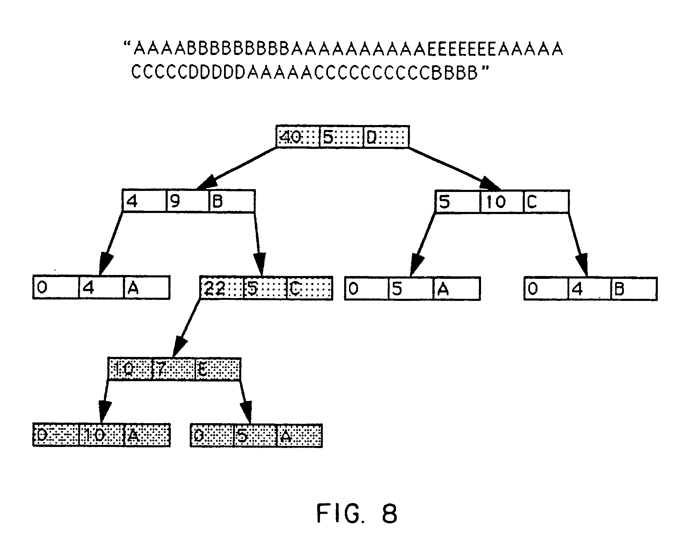

Inserting elements into the run array which causes a node to split is only slightly more complicated than the above examples. Assume the run array looks as it did at the end of the last insert. To insert 7 E's beginning at element 23 in the run array, use the standard access routine to determine that element 23 falls in the middle of the (0, 15, A) node. As in the previous example, it is known on the way to the (0, 15, A) node which nodes need to have their index_of_first_element field incremented by 7. The node is split into three nodes: (0, 10, A), (10, 7, E), and (0, 5, A). The (10,7, E) node replaces the current (0, 15, A) node; the (0, 10, A) node gets inserted as the right most node in the left subtree of (10, 7, E) and the (0, 5, A) node gets inserted as the left most node in the right subtree of (10, 7, E) with appropriate updates of the index_of_first_element fields occurring along the way. As with a binary tree, the leftmost node in the right subtree and the rightmost node in the left subtree are the two adjacent nodes to a given node. After this operation, the tree looks like Figure 8. Figure 8 shows the recursive run array representation of Figure 7 modified by the insertion of 7 E's beginning at element 23 in the run array. In Figure 8 the light gray nodes had their index_of_first_element updated and the dark gray nodes represent the nodes which are new or completely changed.

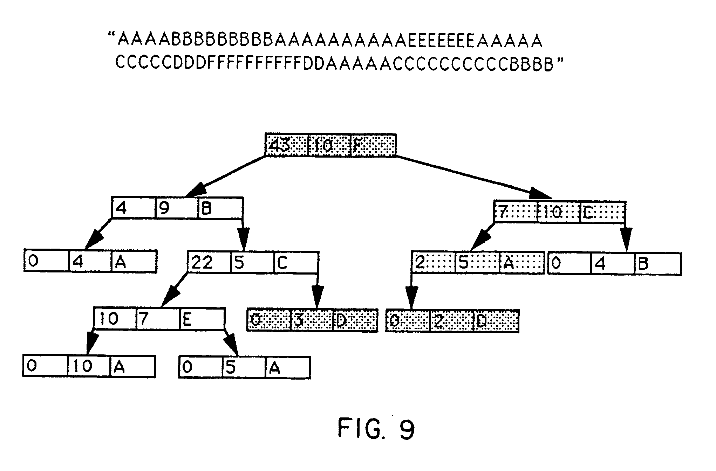

A more complex example of this type of insert would involve splitting the root. Suppose the operation was to insert 10 F's at element 43. The resulting run array is shown in Figure 9. Figure 9 shows the recursive run array representation of Figure 8 modified by the insertion of 10 F's at element 43. Notice that the root element now contains the run of 10 F's and the run of 5 D's has been split and is located as the leftmost node in right subtree and rightmost node in left subtree. Also notice that the index_of_first_element must be updated in the left nodes of the right subtree.

The final insert case to consider would be adding elements to the beginning or end of the array. Adding to the end of the run array simply involves creating a new node and attaching it as the rightmost node in the run array. Adding to the beginning requires updating the index_of_first_element in all of the modes encountered as you insert the new elements as the leftmost node in the run array.

Deletion from the run array is much easier to conceptualize if you realize that a recursive run array is really a recursive run array followed by a run followed by another recursive run array. Another way of stating this is that every subtree is itself a proper recursive run array.

6

Deletion can be accomplished by decomposing the raw delete command into three delete commands. First, delete the elements which must be deleted in the left subtree; next delete the elements which must be deleted in the right subtree; and finally delete the elements in the node itself which must be deleted. Deletion from the run array is similar to deletion from a binary tree. The easiest case involves deleting some elements fully contained in a node or adjacent nodes but not deleting a whole node. A slightly harder case involves deleting elements which cause an entire node to be removed but that node had zero or one children. The hardest case involves deleting a node with two children.

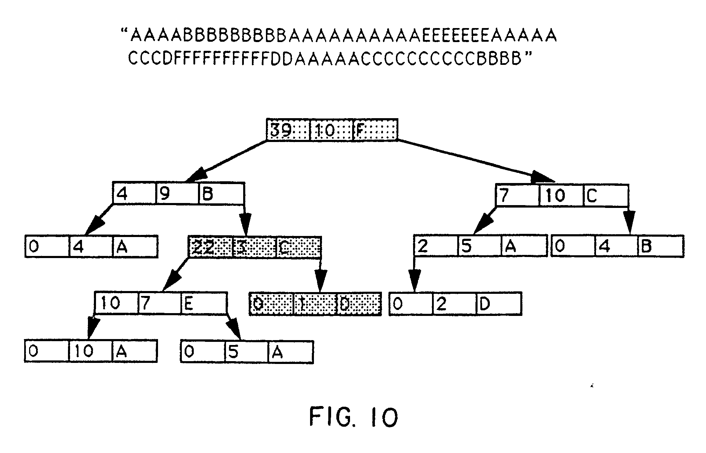

The simplest case of deletion involves removing elements from the run array which doesn't remove nodes from the run array. Suppose that the deletion command, remove 4 elements starting with element 38 is issued. The resulting run array is shown in Figure 10. Figure 10 shows the recursive run array representation of Figure 9 modified by the deletion of 4 elements starting at element 43. The following sequence of operations occur:

1. Node (43, 10, F) determines that this is a delete in its left subtree. It updates its index_of_first_element to reflect that the delete is occurring in its left subtree (that is, node (43, 10, F) becomes (39, 10. F)).

2. Node (4, 9, B) sees that no deletion occurs in its left subtree; but deletion occurs in its right subtree and passes the delete command on.

3. Node (22, 5, C) sees that no deletion occurs in its left subtree; but deletion occurs in its right subtree and passes the deletion on. It also notices that deletion occurs in its own node but will come back to that after the deletion has been handled by the subtrees.

4. Node (0, 3, D) sees that no deletion occurs in its nonexistent subtrees but it needs to remove 2 elements in itself starting at element 0 (node (0, 3, D) becomes node (0, 1, D)).

5. Node (22, 5, C) sees that deletion needs to occur in itself starting at element 25 (with respect to itself) and continuing for 2 elements. The resulting node becomes (22, 3, C).

The resulting run array is shown in Figure 10.

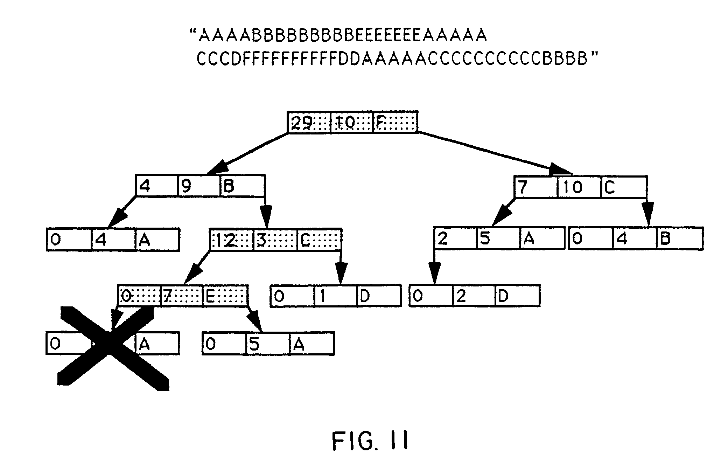

The next simplest case involves a delete operation in which nodes are removed which only contain zero or one children. A trivial delete in the sample run array might be delete 10 elements beginning with element 13. The resulting array is shown in Figure 11. Figure 11 shows the recursrve run array representation of Figure 10 modified by the deletion of 10 elements beginning with element 13. The series of steps which occurred during this deletion would involve decrementing the index_of_first_element count in nodes (39, 10, F), (22, 3, C) and (10, 7, E) and totally removing the node (0, 10, A). The resulting run array is shown in Figure 11.

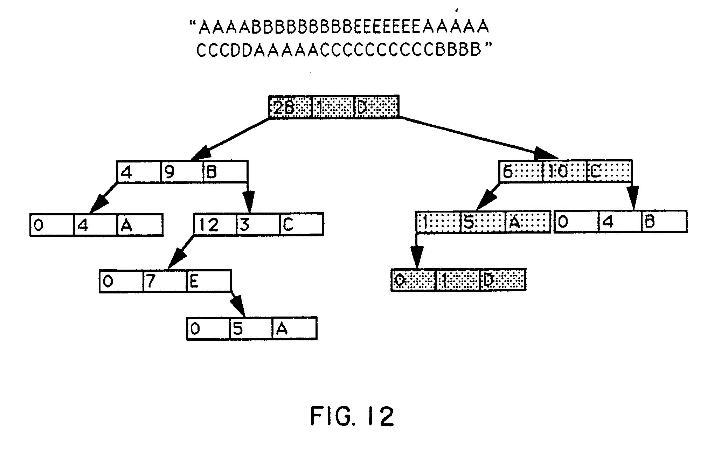

The hard case involves deleting a node with two children. First, it is important to realize that delete is defined to delete the elements in nodes below before deleting the node itself. This is important because delete of a node with two children involves a counter-clockwise and upward rotation of the rightmost child in the left subtree to take the place of the to be deleted node. In a sense, this is an operation to rebalance the tree. The best way to see this operation in action is to delete the root. Suppose it is desired to remove 11 elements starting with element number 29 in the run array. The resulting run array is shown in Figure 12. Figure 12 shows the recursive run array representation of Figure 11 modified by the removal of 11 elements starting with element number 29. The following steps take place:

1. Node (29, 10, F) realizes that no elements must be removed in its left subtree but 1 element must be removed in its right subtree (It also realizes that 10 elements must be removed from itself but it defers this operation until its subtrees have been visited).

2. Node (7, 10, C) realizes that 1 element must be removed in its left subtree and updates its index_of_first_element such that it is now node (6, 10, C).

3. Node (2, 5, A) realizes that 1 element must be removed in its left subtree and updates its index_of_first_element such that it is now node (1, 5, A).

4. Node (0, 2, D) realizes that no elements must be removed from its nonexistent subtrees and 1 element must be removed from itself. It sacrifices the element and is now node (0, 1, D).

5. Finally, returning to node (29, 10, F), remove 10 elements; that is, the whole node. This node must be replaced by the right most node in the left subtree or the leftmost node in the right subtree. Because of the asymmetry with respect to updating, it is more efficient to replace with the rightmost node in the left subtree. The rightmost node in the left subtree has zero or one children. It can not have a right child or it would not be rightmost node.

Node (29, 10, F) is replaced by rotating node (0, 1, D) in the left subtree. The index_of_first_element now equals the old index_of_first_element minus the count in the rotated element (29 -1). The root node becomes (28, 1, D). It is necessary to subtract the count in the rotated element because the new root was once a member of the old root's left subtree.

The child of the rotated node (if there is one) takes the place of the rotated node as the new right most element in the left subtree. No other index_of_first_element stuff needs to be updated.

The resulting run array is shown in Figure 12.

There is one further action after a deletion. A coalesce may need to be performed because now two adjacent nodes may contain the same elements. While this isn't fatal, it is less than optimal. Fortunately, the coalesce can also be accomplished at a speed on the order of log N since it requires only one traversal of the tree.

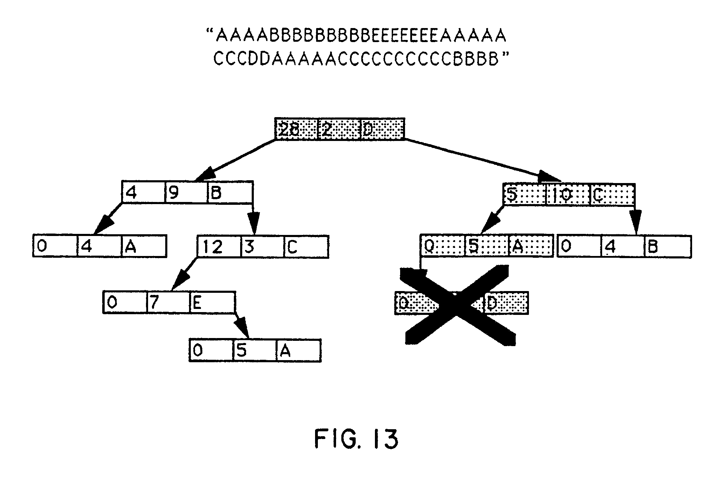

Basically, a coalesce is needed only after the entire deletion operation has occurred, not on a subtree by subtree basis. Only the node before the first deleted node and the node immediately after the last deleted node need to be checked for containing the same element since all the nodes between the two have been removed. In this terminology, "first" and "last" refer to the first deleted node and last deleted node viewing the tree as in an in-order traversal. They do not refer to the first node removed from the tree from the standpoint of the order in which nodes are removed from the run array. If first and last nodes contain the same element, simply delete one of the nodes and insert those elements into the other. Figure 13 shows the recursive run array representation of Figure 12 modified by the coalesce of adjacent nodes containing the same element.

The other common operation on the run array is the replace operation. Suppose it was desired to change 10 elements starting with element number 14 to G's. This operation can really be thought of as a delete followed by an insert. An important optimization is to check if you are changing an entire node and simply doing the replace on that node. This optimization actually comes into play quite a bit in real life - for example, if you are·using run arrays to represent the style information for a piece of text, it is quite common to change an entire run of bold text to italic rather than changing just some part of the run. Of course, it is necessary to check for coalesce after performing this operation.

Caching the most recently accessed run can yield significant performance improvements if a sequence of accesses into the run array tend to have some locality. For example, where it is desired to know the style information for characters n, n + 1, n + 2, ... etc.

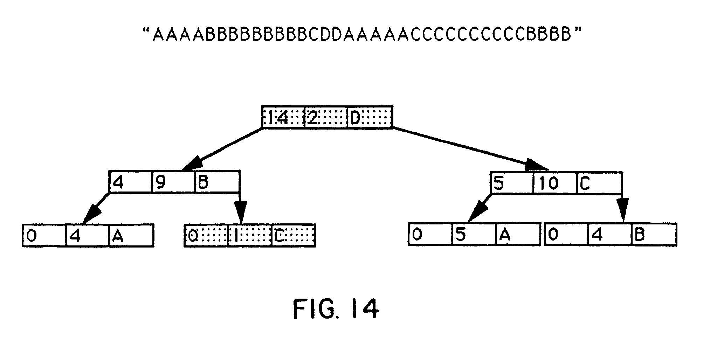

An optimization can speed up the delete operation. This optimization involves realizing that when the entire left subtree needs to be deleted, there is no need to traverse the subtree for deletion - simply lop it off. For example, suppose it is desired to remove 14 elements starting at element number 13 in the run array. The resulting run array is shown in Figure 14. Figure 14 shows the recursive run array representation of Figure 13 modified by the removal of 14 elements starting at element number 13. The following steps need to be performed:

1. Node (28, 2, D) sees that 14 elements must be removed in its left subtree starting at element number 13. It now becomes node (14, 2, D).

2. Node (4, 9, B) sees that 14 elements must be removed in its right subtree starting at element number 0 (with respect to the right subtree).

3. Node (12, 3, C) sees that 12 elements must be removed in its left subtree and realizes that the entire left subtree is to be deleted. The optimization is performed and this node becomes (0, 3, C). Next, the node realizes that 2 elements must be removed from itself and becomes (0, 1, C).

The resulting run array is shown in Figure 14.

There are many areas which can benefit from this invention. The first and most obvious is the storage of style information (such as font, size, and typeface) along with text. In the past, style information has been stored as in the "fast access" solution presented earlier. The recursive run array will substantially improve the performance of updating style information in a document.

Another use of this technology is in the area of support for international character sets. The use of a run array to store character set information may allow the mixing and matching of one byte and two byte representations in memory with little space and performance overhead. This is a substantial space savings compared to a complete 2 byte representation, and only a minor performance overhead. Furthermore, efficient searching algorithms, e.g. Boyer-Moore, are possible using this representation. In fact, this representation can yield an even faster search than just the pure two byte representation when there are lots of character set changes because whole runs of text with differing character sets can be skipped.

Further uses of this technology can occur in the storage of numeric data in spreadsheets or databases. Particularly, where rows or columns of data have runs of similar format, the recursive run array representation can be used to store the format information. Data described by a run may be consecutive, sequential, or be in other fixed linear, structural, or graphical relationship.

Another potential use of recursive run array representation is as a data compression method which does not require de-compression before access and use. Information in a run array representation can be accessed and modified without first reconstructing an entire sequential representation of the information.

These and other embodiments of the invention can be practiced without departing from the true scope and spirit of the invention, which is defined by the following claims.

**Claims**

1. Data storage apparatus comprising:
a plurality of storage node means linked in a tree structure; each of said storage node means storing codes describing a run of data, wherein a run of data is one or more consecutive, equal data elements.

2. Data storage apparatus as in claim 1 wherein said codes describing a run of data comprise:
a count of the number of data elements within said run; and
a single data element of said consecutive, equal data elements of said run.

3. Data storage apparatus as in claim 2 wherein said codes further comprise a starting index for the consecutive, equal data elements of said run.

4. Data storage apparatus as in claim 3 wherein a said starting index within a said storage node means is determined by the position of said storage node means within said tree structure.

5. Data storage apparatus as in claim 1 wherein said storage node means are linked in a tree structure by first and second links, a said first link of a storage node means indicating a storage node means storing a preceding run, and a said second link of a storage node means indicating a storage node means storing a following run.

6. Data storage apparatus as in claim 5 wherein a said link comprises a starting index for the consecutive, equal data elements of a run.

7. Data storage apparatus as in claim 6 wherein a said starting index within a said storage node means is determined by the position of said storage node means within said tree structure.

8. A method of storing data comprising the steps of:
identifying runs within said data, each said run comprising one or more consecutive, equal data elements;
storing codes describing each of said runs in a storage node; and
linking said storage nodes in a tree structure.

9. A method as in claim 8 wherein said step of storing codes describing each of said runs in a storage node comprises:
generating codes describing a said run, said codes comprising a count of the number of data elements within said run, and a single data element of said consecutive, equal data elements of said run; and
storing said codes in a storage node.

10. A method as in claim 9 wherein said codes further comprise a starting index for the consecutive, equal data elements of a run.

11. A method as in claim 10 wherein a said starting index is determined by the position of said storage node means within said tree structure.

12. A method as in claim 8 wherein the step of linking said storage nodes in a tree structure comprises:
for a first said run stored in a first said storage node, generating first and second links, said first link indicating a storage node storing a preceding run, and said second link indicating a storage node storing a following run; and
storing said links in first said storage node.

13. A method as in claim 12 wherein a said link comprises a starting index for the consecutive, equal data elements of a run.

14. Data storage apparatus as in claim 13 wherein a said starting index within a said storage node means is determined by the position of said storage node means within said tree structure.

15. A method of storing data comprising the steps of:
identifying runs within said data, wherein a run is one or more consecutive, equal data elements;
representing each said run by a run node, a said run node comprising:
a first link to the first data element of a preceding run,
a starting index of a first data element of this said run,
a count of the number of data elements within this said run,
a data element representing the data elements of this said run, and
a second link to the first data element of a following run; and
storing said run nodes as a tree structure, wherein each run node can be linked to two other run nodes by said first and second links.

| 54 | Plain |
|----|-------|
| 3  | Italic |
| 25 | Plain |

Table 1

| 41 | Plain |
|----|-------|
| 3  | Bold |
| 10 | Plain |
| 3  | Italic |
| 25 | Plain |

Table 2

FIG. 1 (PRIOR ART)

| 0  | 54 | Plain |
|----|----|-------|
| 54 | 3  | Italic |
| 57 | 25 | Plain |

Table 3

| 0  | 41 | Plain |
|----|----|-------|
| 41 | 3  | Bold |
| 44 | 10 | Plain |
| 54 | 3  | Italic |
| 57 | 25 | Plain |

Table 4

FIG. 2 (PRIOR ART)

"Ask not what your country can do for you
but ask what *you* can do for your country."

| 54 | 3 | Italic |
| --- | --- | --- |

| 0 | 54 | Plain |
| --- | --- | --- |

| 57 | 25 | Plain |
| --- | --- | --- |

## FIG. 3

"Ask not what your country can do for you
**but** ask what *you* can do for your country."

| 54 | 3 | Italic |
| --- | --- | --- |

| 41 | 3 | Bold |
| --- | --- | --- |

| 57 | 25 | Plain |
| --- | --- | --- |

| 0 | 41 | Plain |
| --- | --- | --- |

| 44 | 10 | Plain |
| --- | --- | --- |

## FIG. 4

| | index of first element | count of elements | the element | |
|---|---|---|---|---|

pointer to left child's run array

pointer to right child's run array

# FIG. 5

"AAAABBBBBBBBBAAAAAAAAAA
CCCCCDDDDDAAAAACCCCCCCCCCBBBB"

| 28 | 5 | D |
|---|---|---|

| 4 | 9 | B |
|---|---|---|

| 5 | 10 | C |
|---|---|---|

| 0 | 4 | A |
|---|---|---|

| 10 | 5 | C |
|---|---|---|

| 0 | 5 | A |
|---|---|---|

| 0 | 4 | B |
|---|---|---|

| 0 | 10 | A |
|---|---|---|

# FIG. 6

"AAAABBBBBBBBBAAAAAAAAAAAAAAAA
CCCCCDDDDDAAAAACCCCCCCCCCBBBB"

FIG. 7

"AAAABBBBBBBBBAAAAAAAAAAAEEEEEEEEAAAAA
CCCCCDDDDDAAAAACCCCCCCCCCBBBB"

FIG. 8

"AAAABBBBBBBBBAAAAAAAAAAAEEEEEEEAAAAA
CCCCCDDDFFFFFFFFFFFDDAAAAACCCCCCCCCCBBBB"

FIG. 9

"AAAABBBBBBBBBAAAAAAAAAAAEEEEEEEAAAAA
CCCDFFFFFFFFFFFDDAAAAACCCCCCCCCCBBBB"

FIG. 10

"AAAABBBBBBBBBEEEEEEEEAAAAA
CCCDFFFFFFFFFFFDDAAAAACCCCCCCCCCBBBB"

FIG. 11

"AAAABBBBBBBBBEEEEEEEEAAAAA
CCCDDAAAAACCCCCCCCCCBBBB"

| 26 | 1 | D |

| 4 | 9 | B |

| 6 | 10 | C |

| 0 | 4 | A |

| 12 | 3 | C |

| 1 | 5 | A |

| 0 | 4 | B |

| 0 | 7 | E |

| 0 | 1 | D |

| 0 | 5 | A |

FIG. 12

"AAAABBBBBBBBBEEEEEEEEAAAAA
CCCDDAAAAACCCCCCCCCCBBBB"

FIG. 13

"AAAABBBBBBBBBBCDDAAAAACCCCCCCCCCBBBB"

FIG. 14